# EUROPÄISCHE PATENTANMELDUNG

(11) **EP 2 104 353 A1**
(43) Veröffentlichungstag der Anmeldung: **23.09.2009**
(21) Anmeldenummer: 08102810.2
(22) Anmeldetag: 20.03.2008
(51) Int. Cl.: H04N 7/24, H04N 7/173, H04H 60/74

(54) **Verfahren und System zur Identifikation von gesendeten Multi-media-/ Media-Daten**

(71) Anmelder: yodoba AG, 8006 Zürich (CH)
(72) Erfinder: Notter, Gregor, 8006 Zürich (CH)
(74) Vertreter: Fischer, Michael

(57) **Zusammenfassung**

Es werden ein Verfahren und ein System zur Identifizierung von empfangbaren Multimedia-Daten offenbart, bei denen:
a) die Multimedia-Daten unter Hinzufügung eines inhaltsbezogenen Identifizierungskodes (MMI) eindeutig katalogisiert werden,
b) Teile der katalogisierten Multimedia-Daten zusammen mit ihrem inhaltsbezogenen Identifizierungskode ausgestrahlt werden;
c) die ausgestrahlten Multimedia-Daten zusammen mit ihrem inhaltsbezogenen Identifizierungskode auf einem Empfangs/Wiedergabegerät empfangen werden;
d) die empfangenen Multimedia-Daten wiedergegeben werden;
e) mittels Benutzereinwirkung der inhaltsbezogenen Identifizierungskode der aktuell wiedergegebenen Multimedia-Daten auf dem Empfang-/Wiedergabegerät gespeichert wird;
f) die gespeicherten Identifizierungskodes auf ein portables Speichermedium übertragen werden; und
g) mittels der auf dem portablen Speichermedium gespeicherten Identifizierungskodes ein Zugang zu den entsprechenden Multimedia-Daten eröffnet wird. oder andere Interaktionen auslösst.

## Beschreibung

Die vorliegende Erfindung bezieht sich auf ein Verfahren und ein System zur Identifizierung von empfangbaren Multimedia-Daten.

Die Möglichkeit der Trennung von Musikstücken und Tonträgern im Zuge der Entwicklung von Audiodatenkompression sowie die Verbreitung von IP-basierten Netzwerken haben dazu geführt, dass Musikstücke bzw. mediale Inhalte mittels geeigneter Hard-und Software von Download-Plattformen herunter geladen werden können. Die - nun auch unabhängig von deren Einbindung in Musikalben erhältlichen - Musikstücke werden von den Konsumenten auf stationären oder portablen Speichermedien abgespeichert und von dort aus konsumiert. Das gleiche Prinzip gilt z.B. auch für Videodaten.

Die einfache Verfügbarkeit von oben beschriebenen Medien sowie entsprechender Hard- und Software zum Dekodieren der Medien und deren zunehmender Attraktivität aus Endkundensicht haben zu einem Rückgang der Nutzungsdauer des klassischen Radios geführt. Diese Tatsache hat sich - gerade für private Radioveranstalter / Sender, deren Werbeeinnahmen vom Kontakt zu werberelevanten Zielgruppen abhängen - zu einem ernst zu nehmenden Problem entwickelt.

Die oben beschriebenen Zusammenhänge sowie die im Folgenden aufgezählten Punkte a) - c) spielen eine gewichtige Rolle für die Motivation der vorliegenden nachfolgend erläuterten Erfindung:
a) Radio ist seit vielen Jahrzehnten für die Bevölkerung - besonders in der Küche und im Auto - das am stärksten anerkannte Informations- und Unterhaltungsmedium. Der überwiegende Teil der Bevölkerung kennt die Situation, in der ein Lied im Radio gespielt wird, dessen Titel, Interpret, Version etc. man gern wüsste, z.B. um sich das Lied selbst beschaffen zu können oder um sich einfach an Situationen in der Vergangenheit zu erinnern. Da diese Liedtitel-Informationen von den meisten Radioprogrammen nicht gesendet werden und/oder Radios diese Informationen mangels Ausstattung mit entsprechenden Decodern und Displays nicht oder nur rudimentär, beispielsweise mit RDS, anzeigen können und/oder der Moderator diese Informationen verbal nicht mitteilt, ist dies jedoch selten möglich.
   Mittlerweile werden zwar zu verschiedenen Sendungen Titellisten im Internet veröffentlicht, jedoch liegen der Zeitpunkt des Hörens und der Zeitpunkt, zu dem ein Zugang zu diesen Titellisten bestehen kann, in der Regel soweit auseinander, dass das gehörte Stück schon wieder in Vergessenheit geraten ist. Ausserdem existieren erschwerend für die meisten Liedtitel auch mehrere Versionen. Da die Musikstücke in den Titellisten aber nicht so spezifisch gekennzeichnet werden, hat der Endkunde meist keine Möglichkeit, genau die gehörte Titelversion zu identifizieren, die er später beziehen möchte.
b) Darüber hinaus eignet sich die Quelle Radio nicht für das Mitschneiden von Liedern, da die Lieder selten bis nie komplett ausgespielt werden (z.B. wegen Unterbrechungen durch Nachrichten, Verkehrsmeldungen u.a.)
c) Des Weiteren ist im Endkundenmarkt durch die schnelle Weiterentwicklung der Konsumelektronik die Erwartungshaltung entstanden, dass Radio sich weiterentwickelt und den Hörern mehr Zusatznutzen bietet als heute.

Der vorliegenden Erfindung liegt daher die Aufgabe zugrunde, ein System und ein Verfahren zur Identifizierung von empfangbaren Multimedia-Daten anzugeben, mit deren die Identifizierung der Multimedia-Daten leicht bereits während des Hör- oder Sehvorganges so eingeleitet werden kann, dass die Multimedia-Daten später eindeutig identifizierbar sind.

Die Implementierung eines im Folgenden detailliert beschriebenen Dienstes seitens der Radioveranstalter / Sender - ermöglicht durch die Kooperation von/mit Inhalte-Anbietern, der Radiogeräteindustrie sowie Downloadplattformen - kann die genannten Problemstellungen und Herausforderungen - Rückgang der Hörerzahlen, Informationsbereitstellung zu gespielten Liedern bzw. Inhalten, Angebotserweiterung, Vereinfachung des Zuganges zu den originalen Medieninhalten zwecks Download der Originalmedien in Originallänge - nachhaltig verbessern.

Zusätzlich führt die Implementierung des nachstehend beschriebenen Verfahrens bzw. der Technologie zu einem neuen Vertriebsweg für Musik und andere Medien bzw. Daten.

Es handelt sich bei der vorliegenden Erfindung um ein neuartiges Verfahren und System, welche in erster Linie den einfachen, effektiven und somit benutzerfreundlichen Bezug von Musik und anderen empfangenen Mediendaten ermöglicht.

Das Verfahren erlaubt es Endkonsumenten während des Hörens von Musikstücken oder Wahrnehmung anderer Sendeinhalte im Radio oder Fernsehen diese Titel / Sendeinhalte im Gegensatz zum bekannten Verfahren des Mitschneidens nun spontan durch Knopfdruck am Empfangsgerät zunächst für sich zu reservieren / referenzieren, um diese später, z.B. via IP-basierten Netzwerken auszugsweise erneut zu hören bzw. die Titel / Sendeinhalte in kompletter Länge und digitalisiert herunter zu laden.

Im Gegensatz zum üblichen Verfahren des spontanen Mitschneidens z.B. von Musik vom Radioprogramm / des Senders mit den üblichen Mitteln verhindern Unterbrechungen während des Musikhörens, z.B. durch plötzlich einsetzende Nachrichtensendungen, Werbung, Anmoderationen, nicht, dass der Endkunde später auf seine Musikstücke/ Sendeinhalte in Originallänge Zugriff hat.

Endkunden können sich so durch dieses Verfahren u.a. das zeitaufwändige Suchen, wie beispielsweise sequentielles Hören von Musiktiteln bzw. Musik-CD's in Fachmärkten oder auch auf Musik- bzw. Mediendownloadplattformen, zumindest vereinfachen.

Mit diesem Verfahren lässt sich auch der Bezug von anderweitigen Medien (wie z.B. Videodaten), Informationen oder Daten ermöglichen. Demzufolge sei hiermit vereinbart, dass sämtliche nachfolgende Verfahrens- und Technologiebeschreibungen prinzipiell auch für diese anderweitigen Medien, Informationen und/oder Daten gelten bzw. für diese anwendbar sind.

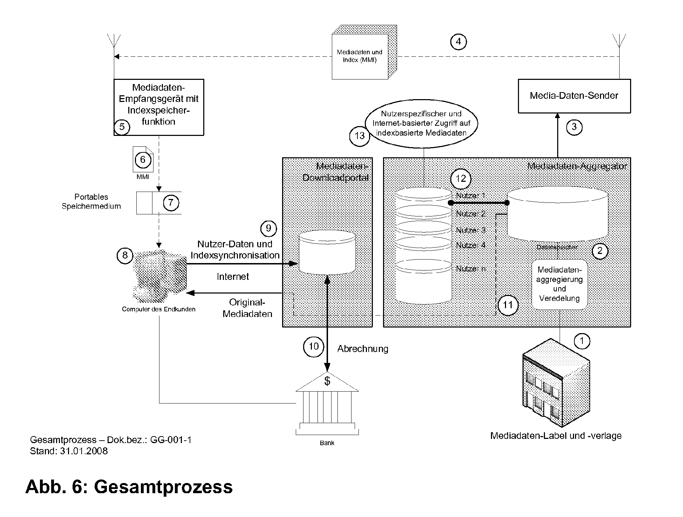

Es gilt weiterhin, dass von den Radiostationen oder anderen Sendequellen, seien sie basiert auf analoger oder digitaler Verbreitungstechnik (nachfolgend als *"Sender"* bezeichnet), identifizierbare Audio-, Videodaten oder andere Daten bzw. jegliche Kombinationen der soeben genannten Daten verbreitet werden können. Diese sollen für die Verfahrensbeschreibung nun allgemein unter dem Sammelbegriff "Multimedia-Daten" zusammengefasst werden (vgl. Figur 6 und zugehörige nachstehende Beschreibung zur Figur 6).

Multimedia-/ Media-Daten werden z.B. von der Musik- bzw. Multimediaindustrie, von Musik-Labels, Musikverlagen etc. dem Media- / Mulitmediadaten-Aggregator angeliefert (①). Hier werden die Multimedia-/ Media-Daten speziell veredelt und in Datenbanken bzw. auf Datenservern abgespeichert. (②)
Den Multimedia-/ Media-Daten wird an dieser Stelle mittels spezieller Software bzw. Algorithmen ein Index/Identifier zugeordnet, der die Daten eineindeutig kennzeichnet. Dieser Index soll nachfolgend als Multimedia-Index bezeichnet werden - kurz: *MMI.*

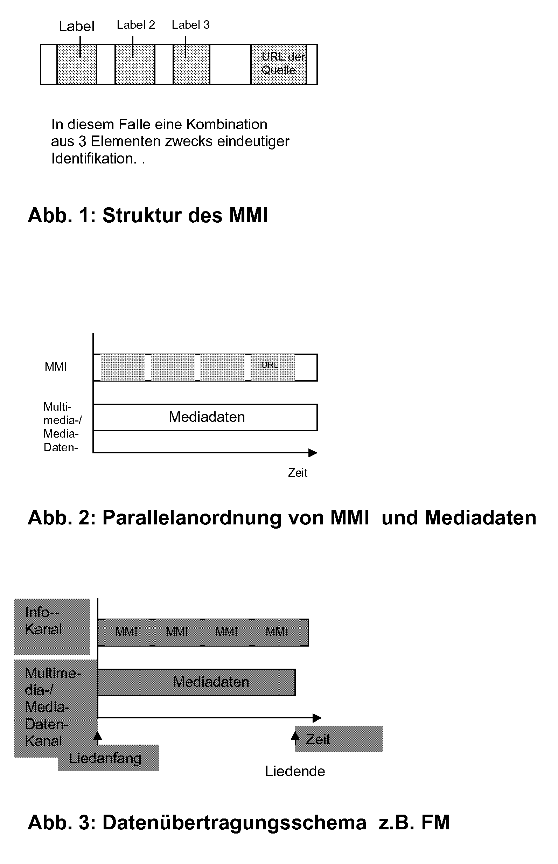

Der MMI ist prinzipiell eine spezielle Metadaten-Struktur (numerisch- oder alpha-numerisch), die als eineindeutiger Identifiziierungscode bzw. Primärschlüssel der Multimedia-/ Media-Daten weltweit nur einem einzigen Musikstück, einer Videosequenz oder anderem Mediadatum zugeordnet ist und sich nicht wiederholen kann.
Die Struktur des MMI lässt sich schematisch wie folgt darstellen (Beispiel): Eine eindeutige Kombination von min. einer Identifikation (Element) zum Mediadatum plus der Zuweisung einer Quelle (vgl. Abb. 1).

Sollte es das Übertragungsverfahren erfordern, wird der MMI entweder in der oben beschriebenen Struktur den Multimedia-Daten zugeordnet oder wird z. B. in folgende Struktur überführt (vgl. Abbildung 2)

Die Multimedia-Daten werden den Sendern in relevanter Codierung zur Verfügung gestellt, um für die Verbreitung seitens der Sender verwendet werden zu können. (③)

Auf der Senderseite werden die Multimedia-Daten für deren Verbreitung entsprechend aufbereitet und anschließend über die dort zur Verfügung stehenden Kanäle verbreitet. Dabei sind die Verfahren zur Verbreitung der Multimedia-Daten abhängig von der Sendetechnologie. Grundsätzlich gilt, dass Multimedia-Daten wie auch der MMI parallel verbreitet werden, wobei der MMI maximal nur so oft gesendet wird, wie die Länge der Multimedia-Daten und die Bandbreite des Datenkanals dies zulassen.

Im Falle von FM-Radiostationen werden die Multimedia-Daten über die Radioträgerfrequenz ausgestrahlt und der MMI parallel über den Datenkanal RDS verbreitet. (④)

Zur besseren Übersicht soll am Beispiel von FM-Radiosendern das Prinzip der Datenübertragung (Multimedia-/ Media-Daten und MMI) via Broadcasting hier anhand eines Schemas veranschaulicht werden. Eine genauere Beschreibung findet sich zur Abbildung 6.

Der zu den Multimedia-Daten (z.B. Lied) gehörende MMI wird demnach parallel zur Übertragung der Median-Daten so oft wie möglich wiederholt, um die vollständige Übertragung des MMI sicherzustellen. Die Anzahl der möglichen Wiederholungen hängt neben der Länge der ausgestrahlten Multimedia-Daten auch von der Menge sonstiger Daten ab, die im gleichen RDS-Datenkanal übertragen werden müssen, wenn der MMI nicht in einem MMIspezifischen RDS-Datenkanal übertragen wird.

Aus Gründen der begrenzten Bandbreite im RDS-Band ergibt sich generell die Notwendigkeit, die Anzahl der zu übertragenden MMI-Daten so gering wie möglich zu halten.

Um dies zu erreichen, sind zwei Vorgehensweisen anwendbar:
a) Reduktion der MMI- Datenmenge;
b) Kompression der MMI-Daten.

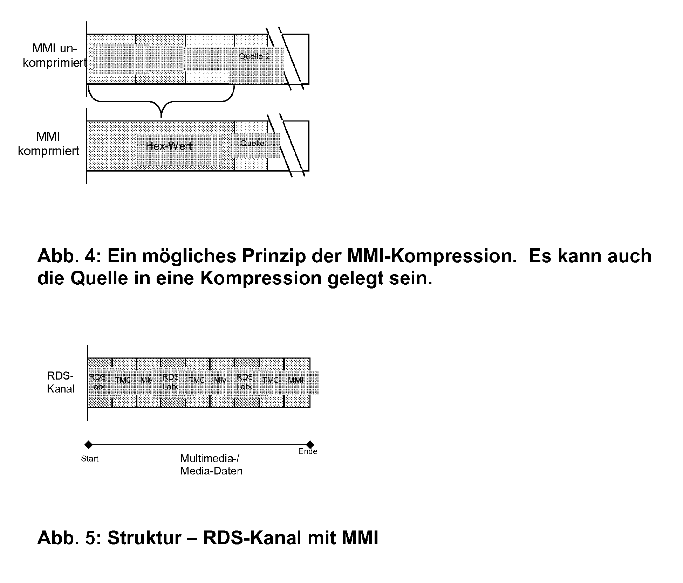

Das Prinzip dieser Kompression stellt sich wie folgt dar (zum Beispiel in Figur 4 dargestellt):

Der MMI kann über verschiedene RDS-Kanäle übertragen werden. Im Falle der Integration in den TMC-RDS-Kanal ließe sich die Struktur der Daten prinzipiell folgendermaßen darstellen (vgl. Abbildung 5). Die MMI-Daten können jedoch auch in einem separaten und für den MMI speziell initiierten RDS-Kanal übertragen werden.

Treffen Multimedia-/ Media-Daten und MMI bei einem entsprechenden Empfangsgerät ein (⑤), wird der MMI in einen dafür vorgesehenen elektronischen Speicher-Bereich der Hardwarearchitektur des Empfangsgerätes transferiert.

Mittels einer oder mehrerer Prüfroutine/n wird geräteintern während der Übertragung des MMI in den Speicherbereich kontinuierlich geprüft, ob die MMI-Daten vollständig übertragen worden sind. Erst wenn die Übertragung des MMI vollständig ist, kann dies am Empfangsgerät in vorteilhafter Ausgestaltung entsprechend kenntlich gemacht (z.B. mittels Symbol im Display, LED o.ä.).

Historisches Caching oder Speichern von übertragenen MMI's ist je nach Gerät und Software-Konfiguration möglich.

Sobald ein MMI vollständig im Empfangsgerät abgespeichert ist, hat der Endkunde die Möglichkeit, den MMI aus dem Geräte-Speicher heraus auf das dem Empfangsgerät zugeordnete Medium oder auf ein am Empfangsgerät angeschlossenes Medium zu übertragen. Die Übertragung des MMI (⑥) kann beispielsweise mittels Knopfdruck am Empfangsgerät initiiert. Ein Speichern wäre aber z.B. auch durch ein entsprechendes Sprachkommando möglich. Im Moment der Betätigung des entsprechenden Auslösers der Übertragungsroutine wird der MMI entweder auf dem Speicher des Empfangsgerät dauerhaft gespeichert bzw. direkt aus dem Speicher des Empfangsgerätes ausgelesen und an das angeschlossene Medium (z.B. USB-Stick, SD-Karte, schnurlos verbundene Speichermedien, etc. oder basierend auf einem Datenprotokoll zu einem stationären Speichergerät wie z.B. PC, Mediaserver) übertragen. (⑦) Außerdem kann der Reset der Anzeige, die dem Endkunden das Vorhandensein eines MMI im Speicher des Empfangsgerätes signalisiert, vorgesehen sein.

Es sei angemerkt, dass im Sinne dieser Anmeldung auch sämtliche andere Auslösungen des Vormerkvorganges - beispielsweise durch Sprachsteuerung, schnurlose Datenübertragung im Sinne einer Fernbedienung oder durch Bedienelemente von am Empfangsgerät angeschlossenen externen Speichermedien - mit eingeschlossen sind.

Sind auf dem mit dem Empfangsgerät (wie z.B. Radioempfänger bzw. auf Tunertechnologie basierende Empfangsgeräte) verbundenen Speichermedium bereits MMI's abgespeichert, werden die weiteren empfangenen MMI's zu den existierenden hinzugefügt.

Der beschriebene Vorgang lässt sich so oft wiederholen, wie die Kapazität des an das Empfangsgerät angeschlossenen Speichermediums dies zulässt.

Die dem MMI zugehörigen Multimedia-Daten werden durch diesen Prozess quasi virtuell vorgemerkt.

Der Endkunde kann den (die) nun auf dem Speichermedium befindlichen MMI('s) mit Hilfe eines Computers / oder anderen IP-basierten Netzwerk fähigem Gerät (⑧), einer speziellen Software und einer IP-basierten Netzwerkverbindung mit einer IP-basierten Netzwerkseite bzw. deren Inhalt synchronisieren. (⑨)

Im Ergebnis dessen werden die zu den MMI's gehörenden Multimedia-Daten dem Endkunden auf der entsprechenden IP-basierten Netzwerk-Seite angezeigt und können dort zur auszugsweise konsumiert werden (z.B. 30 Sekunden je "Multimedia-Daten-Paket", wie z.B. Musikstück, Videosequenz usw.), oder weitere Interaktionen auslösen (z.B. Wettbewerbe).

Der Nutzer kann daraufhin entscheiden, ob er die Daten, wenn nötig, käuflich erwerben möchte oder nicht. Selbstverständlich können Sendeinhalte auch kostenlos vom Sender oder IP-basierten Netzwerk-Service-Portal angeboten werden oder durch sonst wie geartete Kompensation (Gutschein usw.) erworben werden.

Im Falle dessen, dass sich der Endkunde für den Kauf der Daten entscheidet, werden die Kundendaten oder auch Pre-Paid-Kartendaten via IP-basierten Netzwerken verfiziert. Anschließend wird der Bezahlvorgang ausgelöst. (⑩). Bei kostenlosen Inhalten kann natürlich die Identifikation des Datenbeziehers nicht von Bedeutung sein.

Nach bestätigtem Geldtransfer werden die nun gekauften Multimedia-/ Media-Daten via IP-basierten Netzwerken an den Computer bzw. ein anderes IP basierten Netzwerk-fähiges Gerät des Endkunden gesendet. (⑪) Dabei kann der Versand über sämtliche Übertragungskanäle wie beispielsweise GPRS, GSM, UMTS, HSDPA und im allgemeinen DSL / IP basierten Netzwerken) an die Adresse des Nutzers erfolgen (z.B. IP-Adresse).

Alternativ kann der Endkunde auch wählen, dass die gekauften Multimedia-Daten in einem nutzerspezifischen Speicherbereich des Download-Portales bzw. des Media- / Mulitmediadaten-Aggregators als gekauft gekennzeichnet und indiziert abgespeichert werden (⑫). Diesen Speicherbereich kann der Endkunde speziell für sich einrichten lassen.

Die gekauften Media- / Mulitmediadaten stehen dort jederzeit zum Download oder Live-Streaming zur Verfügung - unabhängig vom lokalen Aufenthaltsort des Endkunden.

Die einzigen Voraussetzungen sind
- der Zugang zum Datenserver, z.B. via IP-basierten Netzwerken und
- die Identifikation des Dienstes.
-

Der Endkunde kann die Daten so entweder live nutzen oder sie auf ein Speichermedium laden, das entweder stationär oder portabel sein kann.

Das hier aufgeführte neuartige Verfahren kombiniert folgende Komponenten bzw. Produkte zu einem Gesamtprodukt im Sinne eines technischen Verfahrens. (vgl. auch Abb. 6)

Für das Funktionieren des beschriebenen Verfahrens sind diverse Hardware- und Softwareapplikationen sowie Datenstrukturen erforderlich, die ebenfalls Bestandteil dieser Patentanmeldung sein sollen. Zu nennen sind hier:
- digitalisierte, speziell indizierte Multimedia-Daten,
- ein Massenspeicher-Medium als Quelle der Multimedia-Daten und MMI's (z.B. Groß-Rechner, Mega-Server),
- kabelgebundene oder kabellose Übertragungskanäle (z.B. analoges oder auch digitales Broadcasting - Senden der Daten von definierten Punkten aus zu mehreren geeigneten Empfängern, IP-basierten Netzwerken)
- Empfangsgeräte, die aufgrund ihrer Hardware (z.B. Antennen, Tuner, Speicher, Dekoder, Prozessoren, Schnittstelle zu portablen Speichermedien) und Software die Multimedia-Daten empfangen, ggfs. decodieren, zwischenspeichern, wiedergeben und/oder weiterleiten können.
- portable Geräte (Massenspeichermedien), die sich an Empfangsgeräte mittels entsprechender Schnittstelle (z.B. USB, FireWire, etc.) anschließen lassen, - oder stationäre Geräte (z.B. Home Media Server, PC's etc.), die mit den Empfangsgeräten schnurgebunden oder schnurlos in Verbindung stehen.
- Software, die via IP-basierten Netzwerken die Synchronisation zwischen den MMI's und dem unter erwähnten Massenspeicher (z.B. Server) ermöglicht und den Prozess des unverbindlichen zeitbegrenzten "Probe-Hören bzw. -Sehen" und die Kaufabwicklung von Multimedia-Daten organisiert,
- Software, die es erlaubt, dass der Endkunde unabhängig von seinem lokalen Standort auf die gesendeten Inhalte via IP basierten Netzwerken zugreifen kann.

Resümierend ist daher festzuhalten, dass dieses neuartige Verfahren erstmals die von Sendern verbreiteten Multimedia-Daten und Medien-Download-Portale zum Nutzen der Endkunden verbindet, die somit einen sehr viel einfacheren Zugang zu den Sendeinhalten haben, die sie erneut konsumieren möchten und/oder käuflich erwerben wollen. Es wertet demzufolge die Rolle der Sender aus Sicht der Endkunden, Mediendownloadportale bzw. Medienunternehmen bzw. Labels entscheidend auf. Die Sender in Ihrer Teilrolle als Initiator von Medienkäufen erlangen durch die Einführung dieses Verfahrens eine größere Bedeutung für die Wertschöpfungskette i.V.m. dem Mediengeschäft. Des Weiteren generiert das Verfahren Einsparpotentiale bei den Sendern, da manuelle Aufwände für Media- / Mulitmediadatenveredelung entfallen können. Darüber hinaus entsteht ein neuer Markt für Empfangsgerätehersteller, die neue Vermarktungsmöglichkeiten für neue Empfangsgerätehaben, die das beschriebene Verfahren unterstützen.

## Patentansprüche

1. Verfahren zur Identifizierung von empfangbaren Multimedia-Daten, bei dem
a) die Multimedia-Daten unter Hinzufügung eines inhaltsbezogenen Identifizierungskodes (MMI) eindeutig katalogisiert werden,
b) Teile der katalogisierten Multimedia-Daten zusammen mit ihrem inhaltsbezogenen Identifizierungskode ausgestrahlt werden;
c) die ausgestrahlten Multimedia-Daten zusammen mit ihrem inhaltsbezogenen Identifizierungskode auf einem Empfangs-/Wiedergabegerät empfangen werden;
d) die empfangenen Multimedia-Daten wiedergegeben werden;
e) mittels Benutzereinwirkung der inhaltsbezogenen Identifizierungskode der aktuell wiedergegebenen Multimedia-Daten auf dem Empfang-/Wiedergabegerät gespeichert wird;
f) die gespeicherten Identifizierungskodes auf ein portables Speichermedium übertragen werden; und
g) mittels der auf dem portablen Speichermedium gespeicherten Identifizierungskodes ein Zugang zu den entsprechenden Multimedia-Daten eröffnet wird, oder weitere Interaktionen auslösst.

2. Verfahren nach Anspruch 1, wobei die Multimedia-Daten mit ihren zugehörigen inhaltsbezogenen Identifizierungskodes über eine Rundfunkanstalt auf dem FM und/oder AM-Band ausgestrahlt werden.

3. Verfahren nach Anspruch 1 oder 2, wobei an dem Empfangs-/Wiedergabegerät mittels Knopfdruck der Identifizierungskode zu den gerade wiedergegebenen Multimedia-Daten gespeichert wird.

4. Verfahren nach einem der Ansprüche 1 bis 3, wobei das Empfangs-/Wiedergabegerät ein Rundfunkempfänger ist, vorzugsweise ein in einem Kraftfahrzeug eingebautes Autoradio.

5. Verfahren nach einem der Ansprüche 1 bis 4, wobei der Zugang zu den Multimedia-Daten erzielt wird, indem die Identifizierungskodes mit einem Massenspeicher-Medium als Ursprungsquelle der Multimedia-Daten synchronisiert werden.

6. Verfahren nach Anspruch 5, wobei die Multimedia-Daten nach der Synchronisation zum Download bereitgestellt werden.

7. Verfahren nach einem der Ansprüche 1 bis 6, wobei die Multimedia-Daten Audio-Daten und/oder Video-Daten sind.

8. Verfahren nach Anspruch 7, wobei mittels des Identifizierungskodes ein Musikstück bzw. eine bestimmte Version ein und desselben Musikstücks oder ein Film bzw. eine Filmsequenz oder eine bestimmte Version eines Films oder einer Filmsequenz eindeutig **gekennzeichnet** wird.

9. System zur Identifizierung von empfangbaren Multimedia-Daten, dahingehend ausgestaltet, dass ein Verfahren nach einem der Ansprüche 1 bis 8 ausführbar ist.

10. Empfangs-/Wiedergabegerät für Multimedia zum Einsatz in dem Verfahren nach einem der Ansprüche 1 bis 8, umfassend ein Bedienelement, mit dessen Betätigung der Identifizierungskode für aktuell wiedergegebene Multimedia-Daten speicherbar ist.
